# NEW EUROPEAN PATENT SPECIFICATION

(11) **EP 2 164 770 B2**
(45) Date of publication and mention of the opposition decision: **09.10.2019**
(45) Mention of the grant of the patent: 30.03.2016
(21) Application number: 08759310.9
(22) Date of filing: 20.06.2008
(51) Int. Cl.: B65D 71/06

(54) **PRESTRETCHED FILM**
VORGESTRECKTE FOLIE
FILM PRÉ-ÉTIRÉ

(30) Priority: 21.06.2007 BE 200700313
(43) Date of publication of application: 24.03.2010
(73) Proprietor: Combipac BV, 7772 BJ Hardenberg (NL)
(72) Inventor: HUYGHE, Michael, NL-7772 BJ Hardenberg (NL)
(74) Representative: Michalík, Andrej
(86) International application number: PCT/EP2008/004996
(87) International publication number: WO 2008/155129

(56) References cited:
- EP-A- 0 653 352
- EP-A1- 0 531 021
- EP-A1- 0 614 810
- EP-A1- 0 781 651
- EP-A1- 1 015 228
- EP-A1- 1 177 131
- WO-A-98/26648
- WO-A-2007/010341
- WO-A1-98/50219
- WO-A2-2009/040129
- DE-A1-102006 044 041
- DE-C1- 4 131 916
- DE-T2- 69 604 558
- GB-A- 2 063 809
- GB-A- 2 348 633
- US-A- 5 296 580
- US-A- 5 797 240
- US-A1- 2005 170 194
- Fritz U: "Netzbindung und Folienbindung", Lohnunternehmen, vol. 40, 1 May 1985 (1985-05-01), XP055336129,
- Technical datasheet Dowlex 2045 Polyethylene Resin March 2008
- Information about Highlight Industries Laboratory Test Equipment including information about Highlight's Stretch Film Test Stand; copyright 2011; showing the following url: http://highlightindustries.com/lab-test-eq uipment.html
- Test reports on Highlight's stretch film test stand
- "Technical data sheet Hand Stretch Film (Ergis-Eurofilms)", , Retrieved from the Internet: URL:http://www.drotex.sk/technicke/nanoERG IS12mic_ruc.pdf
- "Technical data sheet nanoERGIS Hand Stretch Film (Ergis-Eurofilms)", , Retrieved from the Internet: URL:http://www.drotex.sk/technicke/nanoERG IS17mic_ruc.pdf
- "Information about Stretch Wrap Film Supplies (Borst Packaging Systems BV)", , Retrieved from the Internet: URL:http://www.borstsystems.com/en/stretch -wrap-film/
- "Baletite leaflet", , Retrieved from the Internet: URL:http://www.silotite.com/product/baleti te
- Krone, Film Tying; dated November 24, 2015
- "Information about McHale Fusion 3 Plus Baler & Wrapper", , Retrieved from the Internet: URL:http://www.showmeshortline.com/assets/ mchale-fusion-3-plus-operators-manual-clt0 0491_rev2.pdf
- SPCR 063: Certification rules for P-marking of Agri-stretch film for round-bale ensiling (SP Technical Research Institute of Sweden); February 2008

## Description

This invention relates to a prestretched film. This invention relates in particular to a prestretched blown extrusion film suitable for baling applications such as, for example, packaging grass, maize, sugar beet pulp, malt, straw, household refuse and other bales.

For silage making, a baler is first used to press compact round or rectangular bales (approx. 500 - 1,300 kg). Bales are subsequently usually wrapped immediately with a number of layers of net (around the circumference in the case of a round bale). By slowing down the roll of net, the roll of net is tensioned tautly around the bale. Once the net is lying around the bale, the formed bale is ejected from the baling chamber. The net ensures that the product remains compressed in the bale and that the bale retains its shape.

Depending on the application, this bale is subsequently wrapped with a standard agricultural stretch wrap film on a bale wrapper so that it is airtight and waterproof.

WO 98/26648 discloses a wrapping apparatus with a powered stretch film dispenser mounted on it which uses a roll of film for wrapping an agricultural bale airtight and waterproof.

These standard agricultural stretch wrap films for wrapping bales are comparable to the industrial stretch wrap films used for wrapping pallet loads, with the difference that the agricultural stretch wrap films are usually colored and ultraviolet stabilized. US Patent 5,296,580 discloses a packaging method in which a described elastic stretch wrap film is stretched and wrapped around a load. WO 2007/010341 A1 discloses the functioning of two prestretching rollers on a stretch wrapper used for stretching and wrapping an industrial stretch wrap film around a load. European Patent number 0 653 352 A1 also discloses a method for wrapping loads with an industrial stretch wrap film by means of two prestretching rollers which function in a particular way. The films concerned here are always standard industrial stretch wrap films which are elastic, and for use on pallet stretch wrappers are stretched and wrapped around a pallet load. The agricultural stretch wrap films for wrapping bales are also elastic and are stretched and wrapped around a bale by means of a bale wrapper.

However, instead of being wrapped with a net on the baler, the bale can also be wrapped with a film. The abovementioned stretch wrap films cannot be used for this purpose, since bales wrapped with such stretch wrap films do not remain compressed and tend to fall apart or lose their shape.

The film used to replace the net is usually a stretch wrap film which is already stretched in the longitudinal direction by the manufacturer of the film in line or out of line with the extrusion process so that a so-called prestretched stretch wrap film is obtained. When placed around the bale, this film presses with a certain slight pressure on the packed material.

Such film has various advantages compared with a net:
- additional protection of the bale;
- extra airtight seal on the round side in a round bale to prevent rotting and fungal growth in the bale;
- film is easier to cut off bale than net;
- bale is much easier to open, since the packed product (such as silage) does not become entangled in the film, unlike a net;
- bale is easier to divide by, for example in the case of maize bales, cutting horizontal slices from bale;
- recycling of the used packaging after the bale has been used is much easier because, unlike a net (HDPE), the film (replacing the net) and the agricultural stretch wrap film (in the case of wrapped bales) does not have to be sorted.

European Patent EP 0 531 021 B1 discloses a process and a method for making a stretch wrap film by plastically and elastically stretching a cooled film and in doing so cold orienting said film and subsequently relaxing it as much as possible. The film still has sufficient elasticity, so that during the wrapping process it settles snugly around the load without damaging the load, and can absorb shocks without tearing.

European Patent EP 1 015 228 discloses a method for making a stretch wrap film comprising the steps of stretching a film to an elongation greater than 100%, removing the side edges, partially relaxing to retain 20 to 80% of the elastic deformation, and storage of the partially relaxed film for further use. During the wrapping of the film around a load the necessary force to be exerted upon the film in order to obtain the required elasticity of a film around the load to be wrapped is substantially lower. The elastic capability still present in the film ensures that the film settles snugly around the load and is thus suitable for stretch applications.

The prestretched stretch wrap films known until now have many advantages, but also have a number of clear disadvantages. The greatest disadvantage is that the existing prestretched stretch wrap films when applied around the bale, as a result of the expansion pressure of the packed product, will elongate if there is insufficient slowing down of the film roll, and consequently will result in a less compact bale. This consequently leads to the absorption of air and an increased oxygen concentration in the bale. If the film roll can actually be slowed down sufficiently, the film will lie sufficiently tautly around the bale, but a constriction (necking) will appear in the film in the transverse direction, with the result that the bale will not be fully covered.

The object of this invention is to provide a film which no longer has the abovementioned disadvantages and by means of which a compact bale, covered over the total width, can be formed.

The present invention therefore provides for the use of a roll and a roll of prestretched film as a net replacement for wrapping bales according to the characterizing parts of the appended claims 1 and 13 and to their dependent claims.

The specification describes a prestretched film, which is produced by stretching a film in the longitudinal direction to at least 60% of its elongation percentage at break, so that in the longitudinal direction said film now only has an elongation capability of maximum 180% left. One of the advantages of such film is that even though the film roll may be slowed down insufficiently, the film, because of its low elasticity, will elongate less through expansion pressure from the packed product than the existing films, so that the bale remains more compact. If the film roll is actually slowed down sufficiently, not only will the film be tensioned tautly around the bale, but the full width of the bale, in particular including a part of the side edge of the bale, will also be covered, since the constriction (necking) in the transverse direction is minimal to non-existent.

By prestretched film we mean a film which is stretched in the longitudinal direction (=machine direction) by means of an MDO (Machine Direction Orientation) unit in or out of line with the extrusion process. If desired, the film may subsequently be relaxed in a relaxation unit and if necessary split and cut to the correct width(s) before being wound onto a roll in a winder.

By elongation percentage at break in this patent specification, we mean the percentage (%) that the film needs to be stretched between the stretch rollers in the MDO in order to make said film break or tear. In order to determine the elongation percentage at break, the elongation percentage between the stretch rollers in the MDO unit is gradually increased until the moment when the film concerned tears.

The term elongation capability in this patent specification is understood to mean: The percentage of elongation until break, measured in accordance with the ASTM D882 standard, in which a strip of film (in longitudinal direction) with a width of 15 mm is clamped between two clamps situated at a distance of 50 mm from each other. The film is subsequently stretched at a rate of 500 mm/min until the film breaks. At least five strips of the film must be tested. The mean value of the measurements indicates the elongation capability.

In a preferred embodiment, in the longitudinal direction the abovementioned film has an elongation capability of maximum 160%. In particular, in the longitudinal direction the film has an elongation capability of maximum 150%, more particularly of maximum 140%, and most particularly of maximum 130%.

In a more preferred embodiment, in the longitudinal direction the abovementioned film has maximum elongation capability of 120%. In particular, in the longitudinal direction the film has an elongation capability of maximum 100%, preferably of maximum 90%, more particularly of maximum 80%, and most particularly of maximum 60%.

In a particular embodiment, said film is produced by stretching a film in the longitudinal direction to at least 70% of its elongation percentage at break. The film is preferably produced by stretching a film in the longitudinal direction to at least 75%, more particularly to at least 80%, and most particularly to at least 90% of its elongation percentage at break.

In an embodiment, the prestretched film is produced by stretching a film in the longitudinal direction to at least 60% of its elongation percentage at break, so that in the longitudinal direction said film has a 2% Secant Modulus of at least 55N/15mm. In an embodiment, the prestretched film preferably has in the longitudinal direction a 2% Secant Modulus of at least 60N/15mm, more preferably of at least 70N/15mm, and in particular of at least 80N/15mm, and most particularly of at least 90N/15mm.

The term Secant Modulus in this patent specification is understood to mean: the direction coefficient of the straight line connecting the origin of the stress-strain curve to the point on the graph at a particular elongation percentage. In this patent specification the Secant Modulus was determined at an elongation of 2 and 10%. The Secant Modulus is determined in accordance with the ASTM D882 standard, a strip of film (in longitudinal direction) with a width of 15 mm being clamped between two clamps situated at a distance of 250 mm from each other. The film is subsequently stretched at a rate of 25 mm/min until the film has elongated by 10%. The 2% Secant Modulus and the 10% Secant Modulus are calculated from the data obtained. At least five strips of the film must be tested. The mean value of the measurements indicates the Secant Modulus. The Secant Modulus is a measure of the stiffness of a film.

In a particular embodiment, said film is produced by stretching a film in the longitudinal direction to at least 70% of its elongation percentage at break. The film is preferably produced by stretching a film in the longitudinal direction to at least 75%, more particularly to at least 80%, and most particularly to at least 90% of its elongation percentage at break.

In an embodiment, the prestretched film is produced by stretching a film in the longitudinal direction to at least 60% of its elongation percentage at break, so that in the longitudinal direction said film has a 10% Secant Modulus of at least 35N/15mm. In an embodiment, the prestretched film in the longitudinal direction preferably has a 10% Secant Modulus of at least 45N/15mm, more preferably of at least 55N/15mm, in particular of at least 65N/15mm, and more particularly the film has in the longitudinal direction a 10% Secant Modulus of at least 75N/15mm.

In a particular embodiment, said film is produced by stretching a film in the longitudinal direction to at least 70% of its elongation percentage at break. The film is preferably produced by stretching a film in the longitudinal direction to at least 75%, more particularly to at least 80%, and most particularly to at least 90% of its elongation percentage at break.

The prestretched film in a most preferred embodiment has a maximum thickness of 16 µm. The prestretched film preferably has a maximum thickness of 15 µm, in particular a maximum thickness of 14 µm, more particularly a maximum thickness of 12 µm. According to a preferred embodiment, the prestretched film has a maximum thickness of 10 µm, preferably a maximum thickness of 9 µm.

In an embodiment, the prestretched film is typically a polyolefin film, such as, for example, but not limited to, polyethylene or a copolymer of ethylene. It can also comprise Ethyl Vinyl Acetate (EVA), plastomers or PIB (polybutene). It goes without saying that a number of further additives such as, e.g., UV stabilizers, pigments and so forth can be added.

In an embodiment, the prestretched film can be either a blown extrusion film or a cast extrusion film.

The prestretched film is a co-extruded film.

This invention is now explained further with reference to the detailed description following below of a number of preferred embodiments of a roll of prestretched film and its use as a net replacement for wrapping bales. The object of this description is to give clarifying examples and to indicate further advantages and details of such films, and this description can therefore in no way be interpreted as a limitation of the field of application of the invention or of the patent rights applied for in the claims.

In this detailed description reference numerals are used to refer to the appended figures, in which:
- ***figure 1******:*** *is* a *view of a tensile strength graph of an existing prestretched film A;*
- ***figure 2******:*** *is a view of a tensile strength graph of an existing prestretched film B;*
- ***figures 3 to 6******:*** *are in each case a view of a tensile strength graph of a film C, D, E and F as described herein;*
- ***figure 7******:*** *is a view of a Secant Modulus graph of an existing prestretched film A;*
- ***figure 8******:*** *is a view of a Secant Modulus graph of an existing prestretched film B;*
- ***figures 9** to **12******:*** *are in each case a view of a Secant Modulus graph of a film C, D, E and F as described herein;*
- ***figure 13*** *is a view of a round bale (1) provided with a film (3) according to the prior art;*
- ***figure 14*** *is a view of a round bale (1) provided with a film (2) as described herein;*

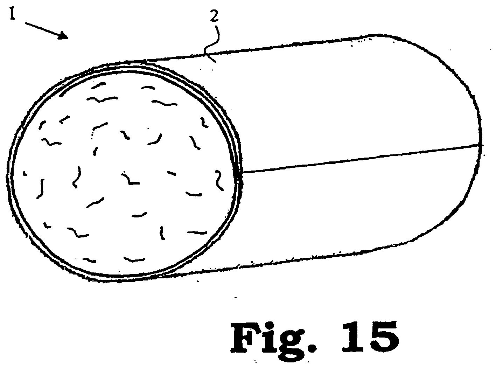

- ***figure 15*** *is a perspective view of a round bale (1) provided with a film (2) as described herein.*

The prestretched film (2) as described herein has a very great stiffness in the longitudinal direction compared with the prestretched films (3) known until now. This great stiffness is obtained by stretching a film, preferably a blown extrusion film, in the longitudinal direction to at least 60% of its elongation percentage at break, so that in the longitudinal direction said film now has only an elongation capability of maximum 180% left (in other words: its remaining elongation capability in longitudinal direction is maximum 180%), or has a 2% Secant Modulus of at least 55N/15mm or has a 10% Secant Modulus of at least 35N/15mm.

Owing to its great stiffness in the longitudinal direction, the prestretched film as described herein has various advantages:
- when the bale is being wrapped on the baler the bale can be tautened more;
- when the bale is being wrapped on the baler only a minimal constriction (necking) is seen in the transverse direction of the film, with the result that the film can cover the bale over its full width, and in some cases there is even an extra overlap to protect the side edges of the bale;
- the film can be produced with a minimal thickness, for example 13µm;
- the wrapping of the bale on the baler is easier, since the film no longer stretches far (by comparison: the existing films which are still extremely stretchable, e.g. 230%, have to undergo further great stretching in order to obtain a compact bale; processing problems can occur during that stretching);
- the feed roll width can be kept minimal, so that no additional adjustments need to be made to the feed part of the baler.

In an embodiment, the prestretched film is typically a polyolefin film, such as, for example, but not limited to, polyethylene or a copolymer of ethylene. It can also comprise Ethyl Vinyl Acetate (EVA), plastomers or PIB (polybutene). It goes without saying that a number of further additives such as, for example, UV stabilizers, pigments and so forth can be added.
The film is produced with a specific thickness and width, preferably by means of blown film extrusion. It is also possible to produce the film by means of cast film extrusion. It is important that the extruded film should not contain any impurities and that it has a good thickness. The extruded film is subsequently stretched in the longitudinal direction (=machine direction) by means of an MDO (Machine Direction Orientation) unit in or out of line with the extrusion process.

The percentage (%) that the film is stretched in the MDO unit is largely determined by the speed setting of the stretching rollers. In order to obtain the claimed maximum elongation capability or at least 2% or 10% Secant Modulus for a specific type of film, the following method is used: the elongation percentage between the stretching rollers is gradually increased up to the moment when the said film tears, thereby determining the elongation percentage at break in the MDO. The elongation percentage between the stretching rollers is now consequently reduced to a level at which the film can be stretched without tearing. The reduction depends on a number of factors such as, for example: thickness distribution, homogeneity, purity and composition of the film and stability of the extrusion process. The set elongation percentage is at least 60% of the elongation percentage at break, but depending on the abovementioned factors it can be at least 65, 75, 80, 85, 90 or 95%. By applying this method, a prestretched film with a limited elongation capability in the longitudinal direction, and therefore with a very great stiffness, is obtained.
The film can be stretched either hot or cold, but the best result is obtained when it is hot, since it can be stretched much further in the MDO unit, resulting in a thinner film, which also has a lower oxygen permeability, a better homogeneity and a greater stiffness. In the case of hot stretching, before being stretched the film runs over a number of heating rollers set at a temperature between 50°C and the softening temperature of the raw material.

Cutting to the correct width(s) can be performed either before or after the stretching process, but for obtaining perfect winding onto the roll it is preferable to cut after the stretching process.

The film can be relaxed either fully or partially, but it is preferable to relax it as much as possible, since otherwise great stresses from the film are exerted upon the core, resulting in the possibility of crushed cores after the winding.

The specification also describes a comparison between two existing films (A and B) and a number of films (C, D, E and F) as described herein. The films C, D, E and F were obtained by means of a blown film extrusion process.

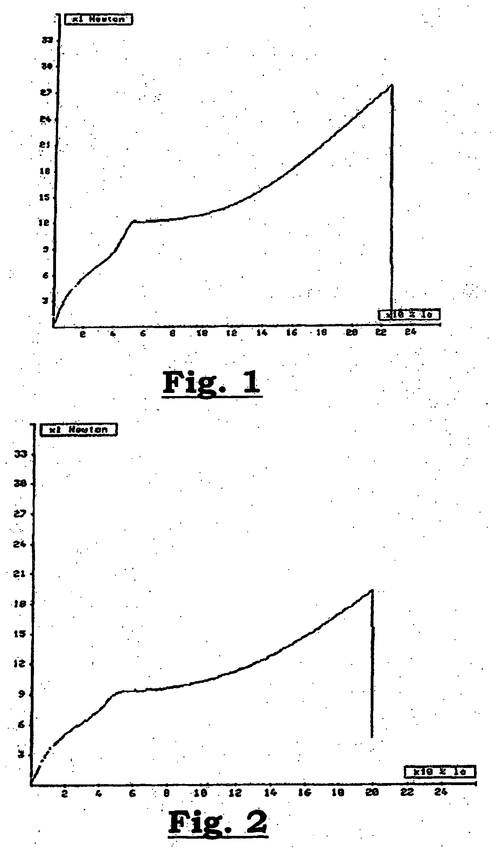

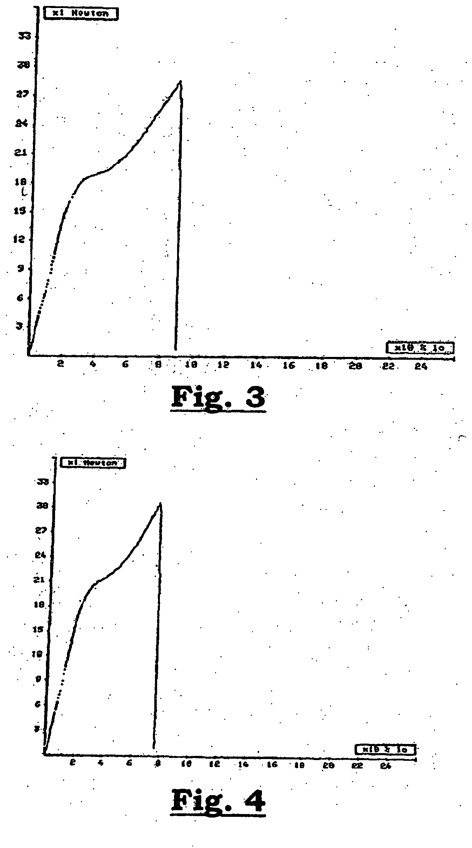

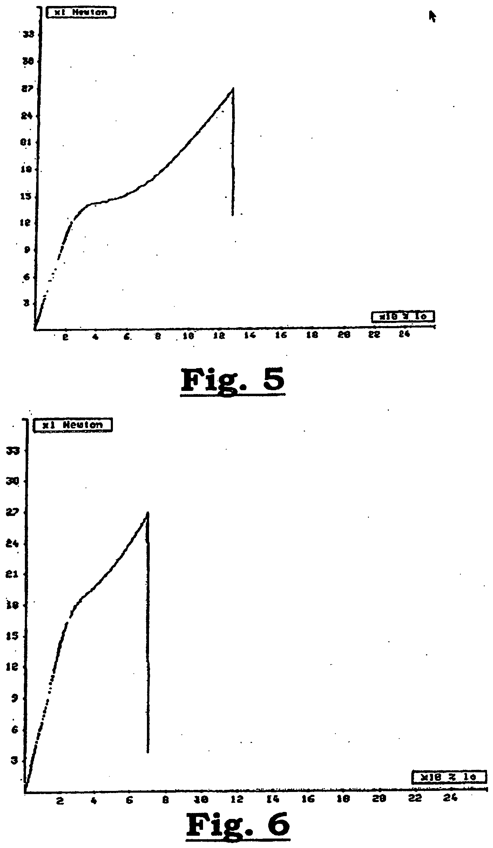

The various films (A, B, C, D, E and F) were subjected to a tensile strength test in the longitudinal direction on a laboratory tensile strength tester in accordance with the ASTM D882 standard. For this purpose, a strip of film with a width of 15 mm was clamped between two clamps situated at a distance of 50 mm from each other. The film was then stretched at a rate of 500 mm/min until the film broke. The results of the test were plotted in Figures 1 to 6, each of which figures shows a tensile strength graph of a film, with the elongation percentage on the X-axis and the force (Newton) exerted upon the film on the Y-axis. The following films were analyzed:

### Film A

Existing prestretched film of producer A with a thickness of approximately 17 µm.

### Film B

Existing prestretched film of producer B with a thickness of approximately 17 µm.

### Film C

Prestretched co-extruded film of the patentee as described herein with the following composition:
- first layer: LDPE; second layer: LLDPE; third layer: LLDPE/LDPE mixture
- white pigment was added to the second layer
- PIB and UV stabilizer were also added in the various layers.

The elongation percentage at break in the MDO unit was 410%.

The elongation percentage in the MDO unit was set at ±90% of the elongation percentage at break, namely 370%, the extrusion thickness = 55µm, and the thickness on the roll in the winder = ± 13µm.

### Film D

Prestretched co-extruded film of the patentee as described herein with the following composition:
- first layer: LDPE; second layer: LLDPE; third layer: LLDPE/LDPE mixture
- white pigment was added to the second layer
- PIB and UV stabilizer were also added in the various layers.
The elongation percentage at break in the MDO unit was 440%.
The elongation percentage in the MDO unit was set at ±93% of the elongation percentage at break, namely 410%, the extrusion thickness = 60µm, and the thickness on the roll in the winder = ± 13µm.

### Film E

Prestretched co-extruded film of the patentee as described herein with the following composition:
- first layer: LDPE; second layer: LLDPE; third layer: LLDPE/LDPE mixture
- no pigment was added.
- PIB and UV stabilizer were also added in the various layers.

The elongation percentage at break in the MDO unit was 410%.

The elongation percentage in the MDO unit was set at ±78% of the elongation percentage at break, namely 320%, the extrusion thickness = 55µm, and the thickness on the roll in the winder = ± 15µm.

### Film F

Prestretched co-extruded film of the patentee as described herein with the following composition:
- first layer: LDPE; second layer: LLDPE; third layer: LLDPE/LDPE mixture
- white pigment was added to the second layer
- PIB and UV stabilizer were also added in the various layers.
The elongation percentage at break in the MDO unit was 460%.
The elongation percentage in the MDO unit was set at ±93% of the elongation percentage at break, namely 430%, the extrusion thickness = 54µm, and the thickness on the roll in the winder = ± 11µm.

The table below gives the measured results for the various films (A - F). A tensile strength test was carried out five times in the longitudinal direction on each film:

**Table 1.1: Elongation percentage and force at break**

| | Measured thickness (µm) | Min. elong.% at break (%) | Max. elong.% at break (%) | Mean elong.% at break (%) | Min. force at break (N) | Max. force at break (N) | Mean force at break (N) |
|---|---|---|---|---|---|---|---|
| A | 17 | 224.8 | 240.6 | 230.5 | 25.3 | 30.9 | 28.4 |
| B | 17 | 181.8 | 217.6 | 197.6 | 16 | 22.6 | 19.18 |
| C | 12 | 88.56 | 96.02 | 91.54 | 27.3 | 30.1 | 28.74 |
| D | 14.5 | 71.98 | 86.94 | 77.78 | 27 | 31.3 | 29.8 |
| E | 13 | 106 | 132.7 | 121.2 | 23 | 28.2 | 25.6 |
| F | 9.4 | 65.22 | 75.98 | 71.55 | 26 | 29.7 | 27.34 |

As can be seen from the above Table 1.1, films A and B on average still have an elongation capability greater than 195%, in other words they are still very elastic by comparison with the films as described herein, such as, for example, film C, which on average now only has an elongation capability of approximately 92%.

**Table 1.2: Tensile force at 20% elongation**

| | Tensile force at 20% elongation (N) |
|---|---|
| A | 6 |
| B | 4.5 |
| C | 15 |
| D | 16.5 |
| E | 11 |
| F | 15 |

As can be seen from Table 1.2, films A and B at 20% elongation give only 4.5 to 6N, in other words the force which the film with a width of 15 mm exerts upon the clamps is very low by comparison with the films as described herein, such as, for example, film C, which will exert 15N.

**Table 1.3: Elongation % at tensile force of 15N**

| | Elong.% at tensile force of 15N (%) |
|---|---|
| A | 130 |
| B | 160 |
| C | 20 |
| D | 18 |
| E | 55 |
| F | 20 |

If one wishes to obtain a tensile force of 15N between the clamps, and therefore on the strip of film with a width of 15 mm, films A and B will stretch 130% and 160% respectively. As can be seen from Table 1.3, the film C as described herein will stretch only 20%, i.e. compared with films A and B, 6.5 and 8 times less respectively. This can also be deduced from the graphs in Figures 1 to 6, from which it can be seen that the gradient of the films as described herein is much higher than that of films A and B, so that they have a steeper curve.

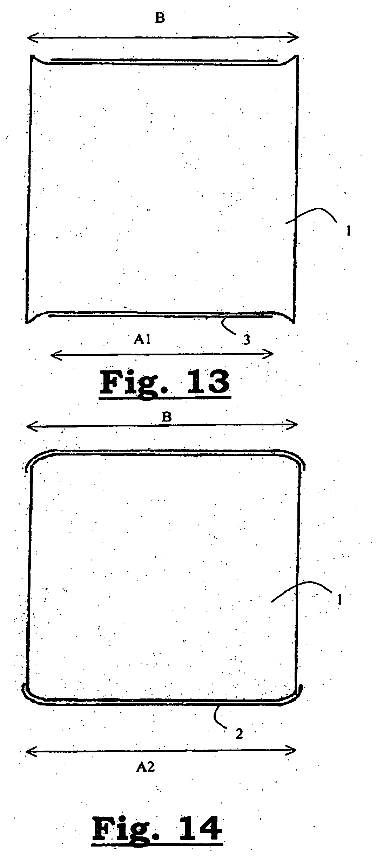

Notwithstanding the fact that the films as described herein are thinner than films A and B, these films (C to F) still have a greater tensile force, without elongating far. To use such films (2) for wrapping a bale in the baler, it will be possible, by slowing down (braking) the film roll, to create a great tensile force upon the film without said film elongating much, this resulting in a limited constriction (necking) or no constriction at all. In other words, the width (A2) of the film (2) is virtually retained, with the result that, as shown in Figure 14, the full width (B) of the bale (1), including a part of the side edge of the bale (1), is covered. In the case of the known films (3), shown in Figure 13, with the same tensile force the film will narrow (constrict) and therefore no longer cover the full bale (1) (see A1 compared with B), resulting in more oxygen inclusion (through piled-up edges of the bale).

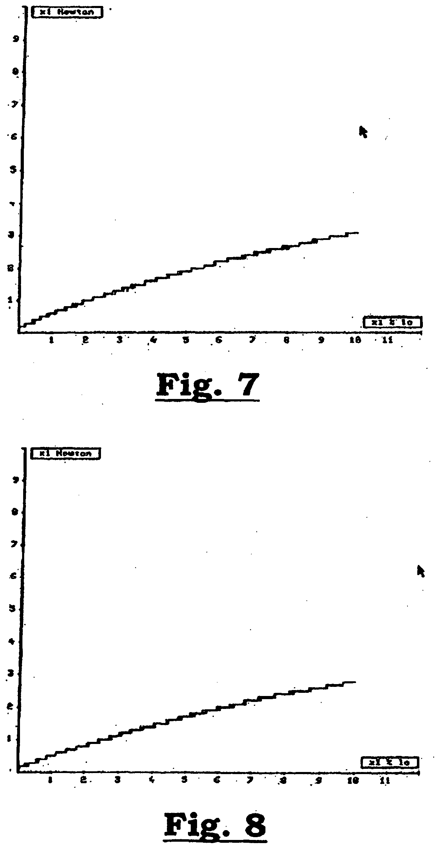

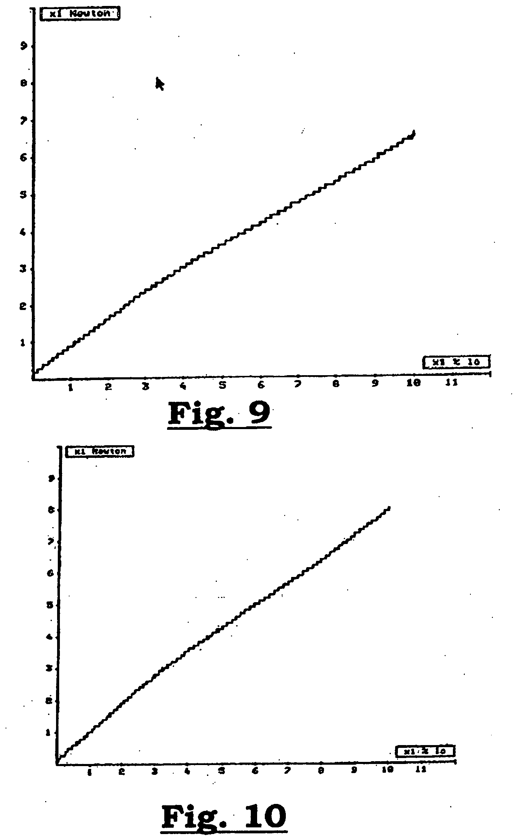

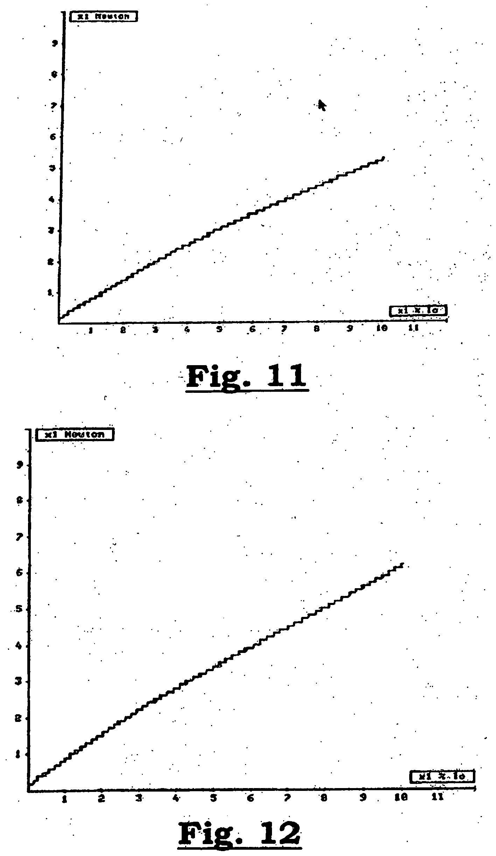

As discussed earlier, the film (2) as described herein has a very great stiffness in the longitudinal direction. A measure of stiffness is the Secant Modulus, which is measured in accordance with the ASTM D882 standard, in which a strip of film with a width of 15 mm is clamped between two clamps situated at a distance of 250 mm from each other. The film is subsequently stretched at a rate of 25 mm/min until the film has elongated by 10%. The data of the various films are given in the table below and are plotted on the graphs shown in Figures 7 to 12. The Secant Modulus test was carried out five times in each case on each film.

**Table 1.4: 2% Secant Modulus**

| | Min. measured value 2% elongation (N/15mm) | Max. measured value 2% elongation (N/15mm) | Mean measured value 2% elongation (N/15mm) | Min. 2% Secant Modulus (N/15mm) | Max. 2% Secant Modulus (N/15mm) | Mean 2% Secant Modulus (N/15mm) |
|---|---|---|---|---|---|---|
| A | 0.9 | 1 | 0.9667 | 45 | 50 | 48.335 |
| B | 0.8 | 0.8 | 0.8 | 40 | 40 | 40 |
| C | 1.5 | 1.6 | 1.567 | 75 | 80 | 78.35 |
| D | 1.7 | 1.9 | 1.767 | 85 | 95 | 88.35 |
| E | 1.3 | 1.4 | 1.367 | 65 | 70 | 68.35 |
| F | 1.5 | 1.6 | 1.533 | 75 | 80 | 76.65 |

**Table 1.5: 10% Secant Modulus**

| | Min. measured value 10% elongation (N/15mm) | Max. measured value 10% elongation (N/15mm) | Mean measured value 10% elongation (N/15mm) | Min. 10% Secant Modulus (N/15mm) | Max. 10% Secant Modulus (N/15mm) | Mean 10% Secant Modulus (N/15mm) |
|---|---|---|---|---|---|---|
| A | 2.9 | 3.3 | 3.1 | 29 | 33 | 31 |
| B | 2.8 | 2.9 | 2.833 | 28 | 29 | 28.33 |
| C | 6.1 | 6.5 | 6.3 | 61 | 65 | 63 |
| D | 7.1 | 8 | 7.433 | 71 | 80 | 74.33 |
| E | 5.2 | 5.4 | 5.3 | 52 | 54 | 53 |
| F | 6.2 | 6.3 | 6.233 | 62 | 63 | 62.33 |

The 2% Secant Modulus and 10% Secant Modulus are calculated from the measured values by dividing the measured values by 0.02 and 0.1 respectively. It can be seen clearly from the above Tables 1.4 and 1.5 that the films as described herein have a 2% Secant Modulus of at least 55N/15mm and a 10% Secant Modulus of at least 35N/15mm.

## Claims

1. Use of a roll of prestretched film as a net replacement for wrapping bales **characterized in that** said film is produced by stretching a film in the longitudinal direction to at least 60% of its elongation percentage at break, so that said film now only has in the longitudinal direction an elongation capability as measured by ASTM D882 of maximum 180% left, and said film is a co-extruded film.

2. Use of a roll of prestretched film according to claim 1, **characterized in that** in the longitudinal direction said film now has an elongation capability of maximum 160%.

3. Use of a roll of prestretched film according to claim 1 or 2, **characterized in that** in the longitudinal direction said film now has an elongation capability of maximum 120%.

4. Use of a roll of prestretched film according to any one of the preceding claims, **characterized in that** in the longitudinal direction said film now has an elongation capability of maximum 80%.

5. Use of a roll of prestretched film according to claim 1, **characterized in that** in the longitudinal direction said film has a 2% Secant Modulus as measured by ASTM D882 of at least 55N/15mm.

6. Use of a roll of prestretched film according to claim 5, **characterized in that** in the longitudinal direction said film has a 2% Secant Modulus of at least 60N/15mm.

7. Use of a roll of prestretched film according to claim 1, **characterized in that** in the longitudinal direction said film has a 10% Secant Modulus as measured by ASTM D882 of at least 35N/15mm.

8. Use of a roll of prestretched film according to claim 7, **characterized in that** in the longitudinal direction said film has a 10% Secant Modulus of at least 45N/15mm.

9. Use of a roll of prestretched film according to any one of the preceding claims, **characterized in that** said film is produced by stretching said film in the longitudinal direction to at least 70% of its elongation percentage at break.

10. Use of a roll of prestretched film according to any one of the preceding claims, **characterized in that** said film is a polyethylene or an ethylene co-polymer film.

11. Use of a roll of prestretched film according to any one of the preceding claims, **characterized in that** said film is a blown extrusion film.

12. Use of a roll of prestretched film according to any one of the preceding claims, **characterized in that** the abovementioned film has a maximum thickness of 16 µm.

13. A roll of prestretched film useful as a net replacement for wrapping bales **characterized in that** said film is produced by stretching a film in the longitudinal direction to at least 60% of its elongation percentage at break, so that in the longitudinal direction said film now only has an elongation capability of maximum 180% left as measured by ASTM D882, and said film is a co-extruded film.

14. A roll of prestretched film according to claim 13, **characterized in that** in the longitudinal direction said film now has an elongation capability of maximum 160%.

15. A roll of prestretched film according to claim 13 or 14, **characterized in that** in the longitudinal direction said film now has an elongation capability of maximum 120%.

16. A roll of prestretched film according to any one of claims 13 to 15, **characterized in that** in the longitudinal direction said film now has an elongation capability of maximum 80%.

17. A roll of prestretched film according to any one of claims 13 to 16, **characterized in that** said film is produced by stretching a film in the longitudinal direction to at least 70% of its elongation percentage at break.

18. A roll of prestretched film according to any one of claims 13 to 17, **characterized in that** said film is a polyethylene or an ethylene co-polymer film.

19. A roll of prestretched film according to any one of claims 13 to 18, **characterized in that** said film is a blown extrusion film.

20. A roll of prestretched film according to any one of claims 13 to 19, **characterized in that** the abovementioned film has a maximum thickness of 16 µm.

## Patentansprüche

1. Verwendung einer Rolle aus vorgestreckter Folie als Netzersatz zum Wickeln von Ballen, **dadurch gekennzeichnet, dass** die Folie durch Strecken einer Folie in Längsrichtung bis mindestens 60% ihres Bruchdehnunsprozentsatzes hergestellt wird, sodass die Folie nun nur in Längsrichtung eine Dehnungsfähigkeit gemäß ASTM D882-Messung von maximal weiteren 180% besitzt, und die Folie eine koextrudierte Folie ist.

2. Verwendung einer Rolle aus vorgestreckter Folie nach Anspruch 1, **dadurch gekennzeichnet, dass** die Folie in Längsrichtung nun eine Dehnungsfähigkeit von höchstens 160% besitzt.

3. Verwendung einer Rolle aus vorgestreckter Folie nach Anspruch 1 oder 2, **dadurch gekennzeichnet, dass** die Folie in Längsrichtung nun eine Dehnungsfähigkeit von höchstens 120% besitzt.

4. Verwendung einer Rolle aus vorgestreckter Folie nach einem der vorhergehenden Ansprüche, **dadurch gekennzeichnet, dass** die Folie in Längsrichtung nun eine Dehnungsfähigkeit von höchstens 80% besitzt.

5. Verwendung einer Rolle aus vorgestreckter Folie nach Anspruch 1, **dadurch gekennzeichnet, dass** die Folie in Längsrichtung ein 2%-Sekantenmodul gemäß ASTM D882-Messung von mindestens 55N/15mm besitzt.

6. Verwendung einer Rolle aus vorgestreckter Folie nach Anspruch 5, **dadurch gekennzeichnet, dass** die Folie in Längsrichtung ein 2%-Sekantenmodul von mindestens 60N/15mm besitzt.

7. Verwendung einer Rolle aus vorgestreckter Folie nach Anspruch 1, **dadurch gekennzeichnet, dass** die Folie in Längsrichtung ein 10%-Sekantenmodul gemäß ASTM D882-Messung von mindestens 35N/15mm besitzt.

8. Verwendung einer Rolle aus vorgestreckter Folie nach Anspruch 7, **dadurch gekennzeichnet, dass** die Folie in Längsrichtung ein 10%-Sekantenmodul von mindestens 45N/15mm besitzt.

9. Verwendung einer Rolle aus vorgestreckter Folie nach einem der vorhergehenden Ansprüche, **dadurch gekennzeichnet, dass** die Folie durch Strecken der Folie in Längsrichtung bis mindestens 70% ihres Bruchdehnungsprozentsatzes hergestellt wird.

10. Verwendung einer Rolle aus vorgestreckter Folie nach einem der vorhergehenden Ansprüche, **dadurch gekennzeichnet, dass** die Folie eine Polyethylen- oder Ethylen-Copolymerfolie ist.

11. Verwendung einer Rolle aus vorgestreckter Folie nach einem der vorhergehenden Ansprüche, **dadurch gekennzeichnet, dass** die Folie eine blasgeformte Extrusionsfolie ist.

12. Verwendung einer Rolle aus vorgestreckter Folie nach einem der vorhergehenden Ansprüche, **dadurch gekennzeichnet, dass** die Folie eine maximale Dicke von 16 µm besitzt.

13. Rolle aus vorgestreckter Folie, die als Netzersatz zum Umwickeln von Ballen verwendet werden kann, **dadurch gekennzeichnet, dass** die Folie durch Strecken einer Folie in Längsrichtung bis mindestens 60% ihres Bruchdehnunsprozentsatzes hergestellt wird, sodass die Folie in Längsrichtung nun nur eine Dehnungsfähigkeit von maximal weiteren 180% gemäß ASTM D882-Messung besitzt, und die Folie eine koextrudierte Folie ist.

14. Rolle aus vorgestreckter Folie nach Anspruch 13, **dadurch gekennzeichnet, dass** die Folie in Längsrichtung nun eine Dehnungsfähigkeit von höchstens 160% besitzt.

15. Rolle aus vorgestreckter Folie nach Anspruch 13 oder 14, **dadurch gekennzeichnet, dass** die Folie in Längsrichtung nun eine Dehnungsfähigkeit von höchstens 120% besitzt.

16. Rolle aus vorgestreckter Folie nach einem der Ansprüche 13 bis 15, **dadurch gekennzeichnet, dass** die Folie in Längsrichtung nun eine Dehnungsfähigkeit von höchstens 80% besitzt.

17. Rolle aus vorgestreckter Folie nach einem der Ansprüche 13 bis 16, **dadurch gekennzeichnet, dass** die Folie durch Strecken einer Folie in Längsrichtung bis mindestens 70% ihres Bruchdehnungsprozentsatzes hergestellt wird.

18. Rolle aus vorgestreckter Folie nach einem der Ansprüche 13 bis 17, **dadurch gekennzeichnet, dass** die Folie eine Polyethylen- oder Ethylen-Copolymerfolie ist.

19. Rolle aus vorgestreckter Folie nach einem der Ansprüche 13 bis 18, **dadurch gekennzeichnet, dass** die Folie eine blasgeformte Extrusionsfolie ist.

20. Rolle aus vorgestreckter Folie nach einem der Ansprüche 13 bis 19, **dadurch gekennzeichnet, dass** die Folie eine maximale Dicke von 16 µm besitzt.

## Revendications

1. Utilisation d'un rouleau de film pré-étiré en remplacement du filet pour envelopper des balles, **caractérisée en ce que** ledit film est produit en étirant un film dans la direction longitudinale jusqu'à au moins 60 % de son pourcentage d'allongement à la rupture, de telle sorte que ledit film a désormais dans la direction longitudinale une capacité d'allongement telle que mesurée par la méthode ASTM D882 d'encore 180 % maximum, et ledit film est un film co-extrudé.

2. Utilisation d'un rouleau de film pré-étiré selon la revendication 1, **caractérisée en ce que** dans la direction longitudinale ledit film a désormais une capacité d'allongement de 160 % maximum.

3. Utilisation d'un rouleau de film pré-étiré selon la revendication 1 ou 2, **caractérisée en ce que** dans la direction longitudinale ledit film a désormais une capacité d'allongement de 120 % maximum.

4. Utilisation d'un rouleau de film pré-étiré selon l'une quelconque des revendications précédentes, **caractérisée en ce que** dans la direction longitudinale ledit film a désormais une capacité d'allongement de 80 % maximum.

5. Utilisation d'un rouleau de film pré-étiré selon la revendication 1, **caractérisée en ce que** dans la direction longitudinale ledit film a un module sécant à 2 % tel que mesuré par la méthode ASTM D882 d'au moins 55 N/15 mm.

6. Utilisation d'un rouleau de film pré-étiré selon la revendication 5, **caractérisée en ce que** dans la direction longitudinale ledit film a un module sécant à 2 % d'au moins 60 N/15 mm.

7. Utilisation d'un rouleau de film pré-étiré selon la revendication 1, **caractérisée en ce que** dans la direction longitudinale ledit film a un module sécant à 10 % tel que mesuré par la méthode ASTM D882 d'au moins 35 N/15 mm.

8. Utilisation d'un rouleau de film pré-étiré selon la revendication 7, **caractérisée en ce que** dans la direction longitudinale ledit film a un module sécant à 10 % d'au moins 45 N/15 mm.

9. Utilisation d'un rouleau de film pré-étiré selon l'une quelconque des revendications précédentes, **caractérisée en ce que** ledit film est produit en étirant ledit film dans la direction longitudinale jusqu'à au moins 70 % de son pourcentage d'allongement à la rupture.

10. Utilisation d'un rouleau de film pré-étiré selon l'une quelconque des revendications précédentes, **caractérisée en ce que** ledit film est un film de polyéthylène ou de copolymère d'éthylène.

11. Utilisation d'un rouleau de film pré-étiré selon l'une quelconque des revendications précédentes, **caractérisée en ce que** ledit film est un film extrudé-soufflé.

12. Utilisation d'un rouleau de film pré-étiré selon l'une quelconque des revendications précédentes, **caractérisée en ce que** le film susmentionné a une épaisseur maximale de 16 µm.

13. Rouleau de film pré-étiré utile en remplacement du filet pour envelopper des balles, **caractérisé en ce que** ledit film est produit en étirant un film dans la direction longitudinale jusqu'à au moins 60 % de son pourcentage d'allongement à la rupture, de telle sorte que dans la direction longitudinale ledit film a désormais une capacité d'allongement d'encore 180 % maximum telle que mesurée par la méthode ASTM D882, et ledit film est un film co-extrudé.

14. Rouleau de film pré-étiré selon la revendication 13, **caractérisé en ce que** dans la direction longitudinale ledit film a désormais une capacité d'allongement de 160 % maximum.

15. Rouleau de film pré-étiré selon la revendication 13 ou 14, **caractérisé en ce que** dans la direction longitudinale ledit film a désormais une capacité d'allongement de 120 % maximum.

16. Rouleau de film pré-étiré selon l'une quelconque des revendications 13 à 15, **caractérisé en ce que** dans la direction longitudinale ledit film a désormais une capacité d'allongement de 80 % maximum.

17. Rouleau de film pré-étiré selon l'une quelconque des revendications 13 à 16, **caractérisé en ce que** ledit film est produit en étirant un film dans la direction longitudinale jusqu'à au moins 70 % de son pourcentage d'allongement à la rupture.

18. Rouleau de film pré-étiré selon l'une quelconque des revendications 13 à 17, **caractérisé en ce que** ledit film est un film de polyéthylène ou de copolymère d'éthylène.

19. Rouleau de film pré-étiré selon l'une quelconque des revendications 13 à 18, **caractérisé en ce que** ledit film est un film extrudé-soufflé.

20. Rouleau de film pré-étiré selon l'une quelconque des revendications 13 à 19, **caractérisé en ce que** le film susmentionné a une épaisseur maximale de 16 µm.
